**Europäisches Patentamt**

**European Patent Office**

**Office européen des brevets**

(19)

(11) Veröffentlichungsnummer : **0 191 114 B2**

(12) # NEUE EUROPÄISCHE PATENTSCHRIFT

(45) Veröffentlichungstag der neuen Patentschrift :
**19.11.92 Patentblatt 92/47**

(51) Int. Cl.[5] : **B29C 47/00, B29C 53/10,**
**// B29L23:00**

(21) Anmeldenummer : **85100485.3**

(22) Anmeldetag : **18.01.85**

(54) **Abzugsvorrichtung für Kunststoff-Schlauchfolien.**

(43) Veröffentlichungstag der Anmeldung :
**20.08.86 Patentblatt 86/34**

(45) Bekanntmachung des Hinweises auf die
Patenterteilung :
**06.04.88 Patentblatt 88/14**

(45) Bekanntmachung des Hinweises auf die
Entscheidung über den Einspruch :
**19.11.92 Patentblatt 92/47**

(84) Benannte Vertragsstaaten :
**AT BE CH DE FR GB IT LI NL SE**

(56) Entgegenhaltungen :
**CH-A- 519 981**
**CH-A- 523 133**
**DE-A- 2 142 210**
**FR-A- 2 201 679**
**JP-A- 594 336**

(73) Patentinhaber : **Alpine Aktiengesellschaft**
**Peter-Dörfler-Strasse 13-25**
**W-8900 Augsburg 22 (DE)**

(72) Erfinder : **Karl, Veit-Holger, Dr.**
**Habichtweg 12**
**W-8903 Bobingen (DE)**

(74) Vertreter : **Charrier, Rolf, Dipl.-Ing.**
**Postfach 260 Rehlingenstrasse 8**
**W-8900 Augsburg 31 (DE)**

EP 0 191 114 B2

**Beschreibung**

Die Erfindung betrifft eine Abzugsvorrichtung für Kunststoff-Schlauchfolien nach dem Oberbegriff des Anspruches 1, wie sie der DE-PS 19 48 935 entnehmbar ist.

Bei dieser bekannten Vorrichtung verläuft die Schlauchfolienbahn zwischen zwei Abzugs- bzw. Abquetschwalzen zu einer ersten Umlenkstange, von dort zu einer ersten Wendestange, von dieser zu einer zweiten Umlenkstange und von dort über eine zweite Wendestange zu einer Aufwickelvorrichtung. Die Längsachsen der Abzugswalzen, der Umlenk- und der Wendestangen verlaufen jeweils horizontal. Die beiden Abzugswalzen drehen sich um eine vertikale Drehachse um ± 180°. Die erste Umlenkstange verläuft parallel zu den beiden Abzugswalzen und dreht sich mit diesen um die horizontale Drehachse. Beide Umlenkstangen bilden mit ihren Längsachsen jeweils Sehnen zu Kreisen, deren Mittelpunkt mit der vertikalen Drehachse zusammenfällt. Die Schwenkachse beider Wendestangen fällt mit der vertikalen Drehachse zusammen. Die erste Wendestange ist um einen Winkel von ± 45° relativ zu ihrer Parallelstellung zur ersten Umlenkstange schwenkbar. Dies gilt auch für den Schwenkwinkel der zweiten Wendestange relativ zur zweiten Umlenkstange. Bei den beiden Umlenkstangen ist die Zulaufachse der Folienbahn in vertikaler Projektion gesehen jeweils deckungsgleich mit der Ablaufachse.

Ausgehend von einer Ausgangsstellung, bei welcher die Längsachsen der Wendestangen rechtwinklig zueinander und jeweils unter 45° zur Längsachse der Abzugswalzen verlaufen und bei welcher die Längsachse der zweiten Umlenkstange rechtwinklig zur Längsachse der Abzugswalzen angeordnet ist, werden nach einer Drehung der Abzugswalze von 90° um ihre vertikale Drehachse, bis zu der die zweite Umlenkstange fest stand, die erste Wendestange und die zweite Umlenkstange mit der ersten Umlenkstange verriegelt, so daß diese Stangen zusammen um weitere 90° mit den Abzugswalzen drehen.

Die beiden Wendestangen und die zweite Umlenkstange sind jeweils an einem Drehring befestigt. Diese Drehringe, deren Achsen mit der Drehachse der Abzugswalze zusammenfallen, sind in einem Gestell oberhalb der Abzugswalze drehbar gelagert. Die Schwenkung dieser Stangen kann wohl durch den in der Schlauchfolie herrschenden und von der Aufwickelvorrichtung ausgeübten Zug bewirkt werden, was jedoch nur unvollkommen möglich ist, da zwischen den Drehringen und dem Gestell eine Reibung unvermeidlich ist und außerdem der in der Schlauchfolie herrschende Zug schwankt. Die Schwenkbewegungen dieser Stangen wird daher bevorzugt durch Antriebe bewirkt.

Hierdurch ergibt sich eine komplizierte Steuerung der Schwenkbewegungen der Stangen. Bei dieser bekannten Vorrichtung sind zu den beiden Wendestangen zusätzlich zwei Umlenkstangen erforderlich. Hierdurch ergibt sich eine große Bauhöhe des Gestells oberhalb der Abzugswalzen.

Eine ähnliche Vorrichtung zeigt die DE-AS 20 35 584, bei welcher die Schwenkbewegungen der beiden Wendestangen und der zweiten Umlenkstange jedoch stets zwangsgesteuert erfolgen muß.

Bei der Vorrichtung nach der DE-PS 21 56 079 sind nur eine Umlenkstange und nur eine Wendestange vorgesehen. Die Umlenkstange ist wie vorbeschrieben angeordnet. Bei dieser Vorrichtung ist nachteilig, daß die Wendestange beim Reversieren der Abzugswalzen, die um ± 135° um die vertikale Drehachse drehen, die Längsachse der Wendestange zur Zu- und Ablaufachse der über sie geführten Schlauchfolienbahn einen stumpfen Winkel bildet, so daß die Gefahr besteht, daß die Schlauchfolienbahn beim Reversieren von der Wendestange abgleitet.

Die JP-A-594336 betrifft eine Abzugsvorrichtung mit drei Wendestangen, welche um vertikale Drehachsen schwenkbar sind, die nicht mit der vertikalen Drehachse der Abzugswalzen zusammenfallen. Dabei ist die durch die Drehachse der Abzugswalzen und die vertikale Schwenkachse der letzten Wendestange bestimmte Ebene parallel zur Laufrichtung der Schlauchfolie von der letzten Wendestange zur Aufwickelvorrichtung. Auch hier besteht der Nachteil, daß beim Reversieren der Abzugswalzen die Folienbahn von der Wendestange abgleiten kann, da in diesem Moment die Zugspannung in der Folienbahn nachläßt.

Es besteht daher die Aufgabe, in allen möglichen relativen Stellungen der Umlenk- und Aufwickelwalzen, die Folie in gespanntem Zustand zu halten und somit ein Aufwickeln mit konstanter Wickelgeschwindigkeit zu ermöglichen.

Gelöst wird diese Aufgabe durch die kennzeichnenden Merkmale des Anspruches 1. Vorteilhafte Ausgestaltungen sind den Unteransprüchen entnehmbar.

Zwei Ausführungsbeispiele werden nachfolgend anhand der Zeichnungen näher erläutert. Es zeigen:

Fig. 1 die Seitenansicht einer ersten Ausführungsform;

Fig. 2 eine Draufsicht auf diese Ausführungsform bei einer Stellung der Teile gem. Fig. 4.

Fig. 3 bis 6 Stellungen der Teile der Vorrichtung bei einer Drehstellung der Abzugswalzen von 0°, 45°, 90° und 135°;

Fig. 7 die Seitenansicht einer zweiten Ausführungsform;

Fig. 8 eine Draufsicht auf die zweite Ausführungsform bei einer Stellung der Teile nach Fig. 10 und

Fig. 9 bis 11 Draufsichten auf die zweite Ausführungsform bei Drehstellungen der Abzugswalzen von 0°, 90° und 180°.

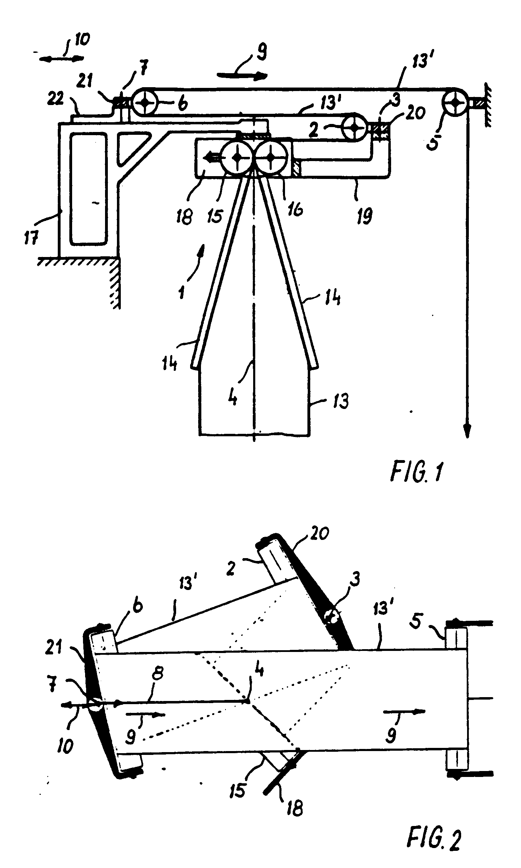

Bei der Ausführungsform gem. den Figuren 1 bis 6 gelangt die vom Blaskopf kommende Schlauchfolie 13 zur Abquetschvorrichtung 1, wo sie zwischen den Flachlegeplatten 14 flachgelegt wird. Danach wird sie durch den Spalt zu zwei Abzugs- bzw. Abquetschwalzen 15, 16 geführt. Die flachgelegte und im Inneren luftfreie Schlauchfolie gelangt vom Spalt zwischen den Abzugswalzen 15, 16 zu einer ersten Wendestange 2. Von dieser Wendestange 2 verläuft die flachgelegte Schlauchfolie 13' zu einer zweiten Wendestange 6, von wo sie zu einer Umlenkwalze 5 gelangt, welche bereits Teil einer sonst nicht dargestellten stationären Aufwickelvorrichtung darstellt.

Die beiden Flachlegeplatten 14 und die beiden Abzugswalzen 15, 16 werden von einem Hilfsgestell 18 getragen, das von einem stationären Gestell 17 drehbar gelagert ist, und zwar derart, daß die Abzugswalzen 15, 16 deren Längsachsen horizontal verlaufen, zusammen mit den Flachlegeplatten 14 um eine vertikale Drehachse 4 drehbar sind. Diese vertikale Drehachse 4 ist identisch mit der Mittenachse des Folienschlauches 13 und damit mit der Mittenachse des nicht dargestellten Blaskopfes, von wo sie von den Abzugswalzen 15, 16 abgezogen wird.

Das Hilfsgestell 18, das am Gestell 17 gelagert ist, weist einen horizontal verlaufenden Ausleger 19 auf, der einen U-förmigen Rahmen 20 lagert, der seinerseits die Wendestange 2 lagert. Dieser Rahmen 20 ist um eine vertikale Achse 3 schwenkbar. Die zweite Wendestange 6 wird ebenfalls von einem Rahmen 21 gelagert, der seinerseits vom Gestell 17 gelagert wird derart, daß die zweite Wendestange 6 um eine vertikale Achse 7 schwenkbar ist.

Auf diese Weise dreht sich die Schwenkachse 3 der ersten Wendestange 2 zusammen mit den Abzugswalzen 15, 16 um die Drehachse 4. Die erste Wendestange 2 ist um diese Schwenkachse 3 schwenkbar.

Die durch die beiden vertikalen Achsen 4 und 7 gebildete Ebene 8 verläuft parallel zur Ablaufrichtung 9 der flachgelegten Folie 13' von der zweiten Wendestange 6 zur Aufwickelvorrichtung, im dargestellten Beispiel also rechtwinklig zur Längsachse der Umlenkwalze 5. Zusätzlich ist der den Rahmen 21 lagernde Hilfsrahmen 22 am Gestell 17 horizontal in dieser Ebene 8 verschiebbar, was durch den Doppelpfeil 10 verdeutlicht wird.

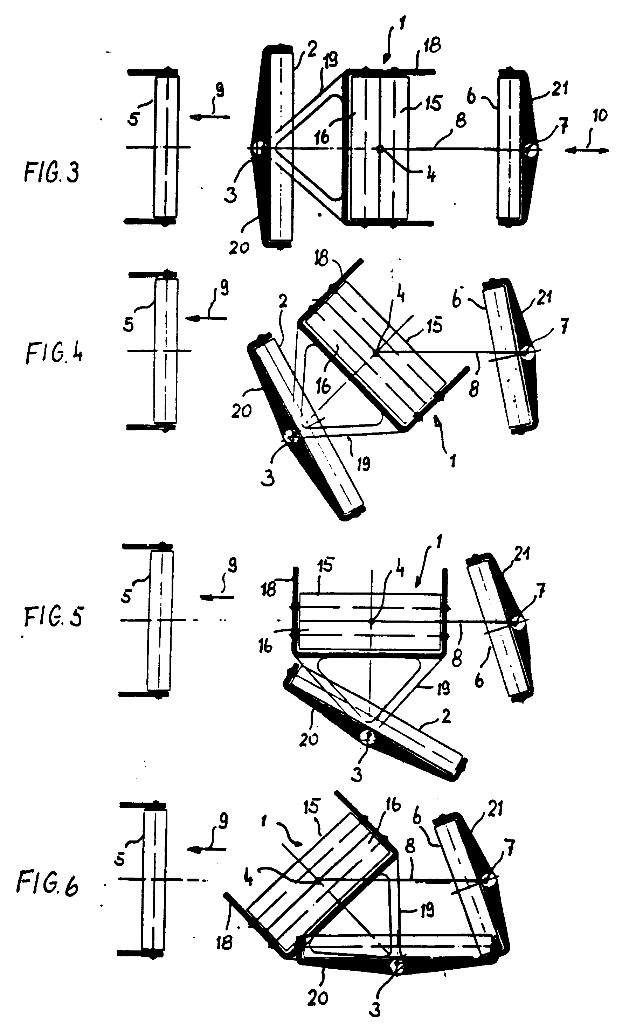

Die Bewegungsabläufe bei der ersten Ausführungsform werden nachfolgend anhand der Figuren 3 bis 6 näher erläutert, wobei die Vorrichtung in einer gegenüber der Fig. 2 um 180° gedrehten Anordnung dargestellt ist, um die Verhältnisse in Bezug auf die zweite Ausführungsform besser verdeutlichen zu können. Das Gestell 18 mit den Abzugswalzen 15, 16 wird ausgehend von der Stellung in Figur 3 im Gegenuhrzeigersinn um 135° um die Drehachse 4 in die in Fig. 6 gezeigte Stellung gedreht. Nach Erreichen der Stellung nach Fig. 6 tritt eine Richtungsumkehr der Drehung des Gestells 18 mit den Abzugswalzen 15, 16 um die vertikale Drehachse 4 ein und diese Drehung nunmehr im Uhrzeigersinn wird fortgesetzt, bis die zur Stellung nach Fig. 6 zur Ebene 8 spiegelbildliche Stellung erreicht ist. Dort findet erneut eine Bewegungsumkehr statt und die sich anschließende Drehung im Gegenuhrzeigersinn wird fortgesetzt, bis wiederum über die Stellungen nach den Fig. 3 bis 5 die Stellung nach Fig. 6 erreicht ist.

Bei der Ausgangsstellung nach Fig. 3 verlaufen die Längsachsen der Abzugswalzen 15, 16 und der Wendestangen 2, 6 rechtwinklig zur Ebene 8, d.h. rechtwinklig zur Laufrichtung 9 der Folie 13' von der zweiten Wendestange 6 zur Aufwickelvorrichtung. Die Längsachsen sind also im dargestellten Beispiel parallel zur Längsachse der Umlenkwalze 5 ausgerichtet. In der Vertikalprojektion befindet sich die erste Wendestange 2 auf der gleichen Seite von der Abquetschvorrichtung 1 wie die Umlenkwalze 5 während die zweite Wendestange 6 sich auf der dazu gegenüberliegenden Seite befindet. Die Schwenkachse 3 liegt hierbei in der Ebene 8, welche durch die Drehachse 4 und die Schwenkachse 7 gebildet wird.

Dreht sich nunmehr das Gestell 18 mit den Abzugswalzen 15, 16 im Gegenuhrzeigersinn um die Drehachse 4, dann führt die Wendestange 2 eine Schwenkbewegung um ihre Schwenkachse 3 im Uhrzeigersinn aus. Gleichzeitig wird die Wendestange 6 um ihre Schwenkachse 7 im Gegenuhrzeigersinn geschwenkt.

Ist die in Fig. 6 gezeigte Stellung erreicht, dann haben sich die Abzugswalzen 15, 16 um 135° um die Drehachse 4 gedreht. Gleichzeitig hat sich hierbei die Schwenkachse 3 um die Drehachse 4 um 135° im Gegenuhrzeigersinn zusammen mit den Abzugswalzen 15, 16 gedreht. Hierbei wurde die erste Wendestange 2 um 45° um ihre vertikale Schwenkachse 3 geschwenkt, während die zweite Wendestange 6 um ihre Schwenkachse 7 eine Schwenkbewegung von 22,5° ausführte.

Die Abzugswalzen 15, 16 ziehen die Schlauchfolie 13 mit konstanter Geschwindigkeit ab. Da die Länge der zusammengelegten Schlauchfolie 13' in ihrem Verlauf von den Abzugswalzen 15, 16 zur Aufwickelvorrichtung Änderungen unterworfen ist, welche durch die Reversierung der Abzugswalzen 15, 16 und durch die Stellungen dieser Abzugswalzen 15, 16 und der Wendestangen 2, 6 bedingt sind, ist eine Ausgleichsmöglichkeit dieser Änderungen vorgesehen. Zu diesem Zweck ist der Drehpunkt 7 der zweiten Wendestange 6 horizontal in der Ebene 8 von und zur Drehachse 4 verschiebbar.

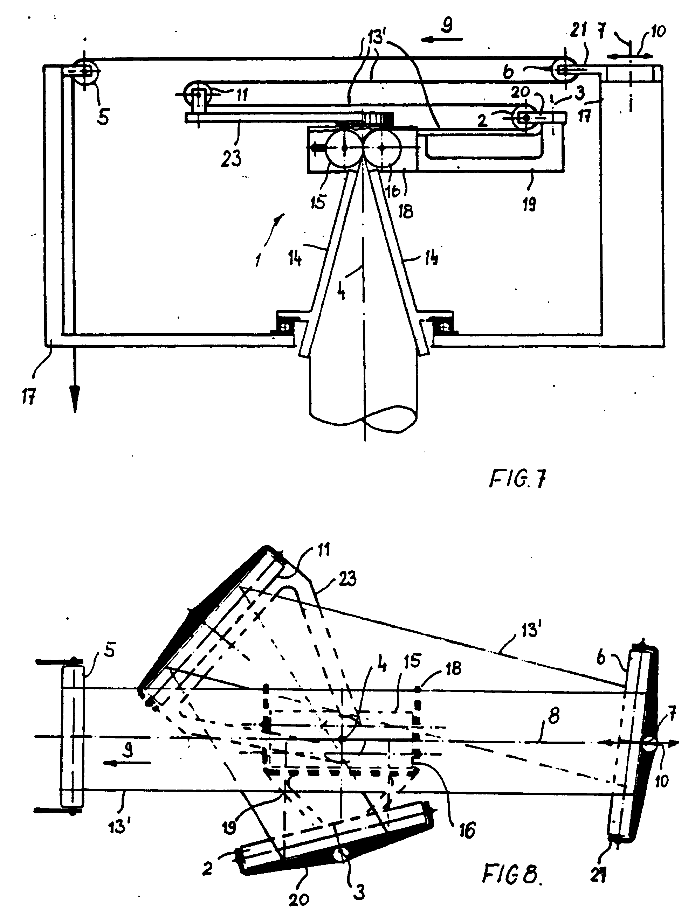

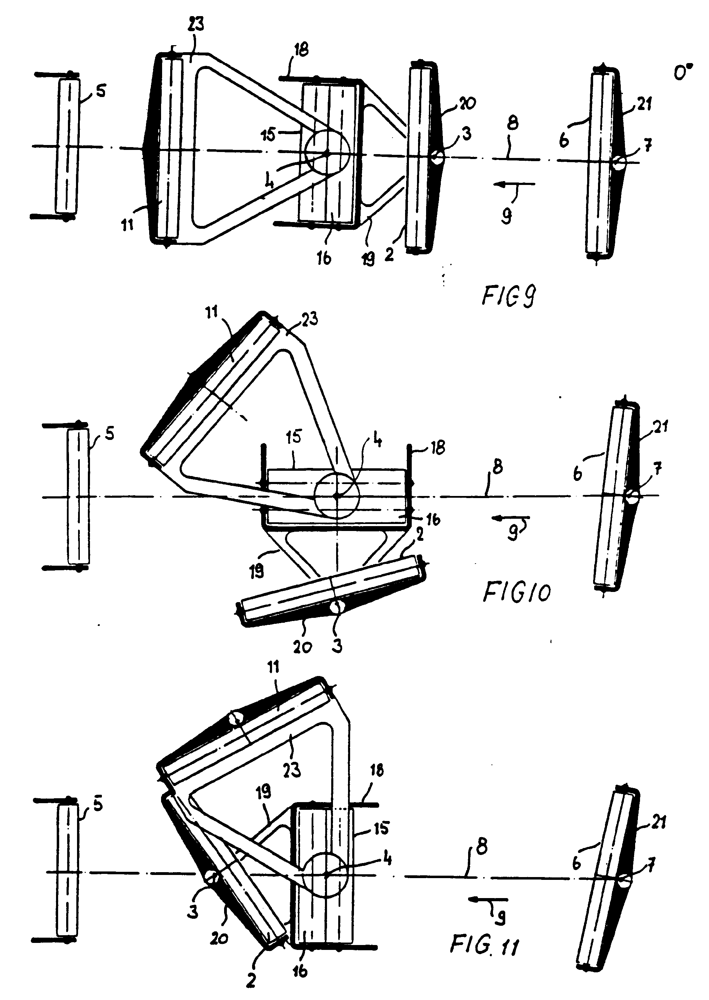

Bei dem Ausführungsbeispiel nach den Figuren 7 bis 11 weisen diejenigen Bauteile, die gleich sind zu Bauteilen nach dem ersten Ausführungsbeispiel die gleichen Bezugszahlen wie im ersten Ausführungsbeispiel auf. Beim zweiten Ausführungsbeispiel ist es möglich, daß die Abquetschvorrichtung 1 ausgehend von der Ausgangslage nach Fig. 9 sich um 180° um die Drehachse 4 nach beiden Richtungen zu drehen vermag. Das Hilfsgestell 18, das auf dem Gestell 17 um die Drehachse 4 drehbar gelagert wird, lagert die Abzugswalzen 15, 16 und trägt die Flachlegeplatten 14. Am Ausleger 19 ist der um die Achse 3 schwenkbare Rahmen 20 gelagert, der seinerseits die erste Wendestange 2 lagert. Die flachgelegte Folie 13' verläuft von dieser Wendestange 2 zu einer weiteren Wendestange 11, die an einem Rahmen 23 gelagert ist, der um die Drehachse 4 schwenkbar ist. Die weitere Wendestange 11 nimmt daher stets eine Lage ein, bei der sie eine Sehne zu einem Kreis bildet, dessen Mittelpunkt auf der Drehachse 4 liegt. Von der weiteren Wendestange 11 gelangt die flachgelegte Schlauchfolie 13' zur zweiten Wendestange 6, die vom Rahmen 21 gelagert wird, der seinerseits um die vertikale Achse 7 schwenkbar am Gestell 17 gelagert ist. Von der zweiten Wendestange 6 verläuft die flachgelegte Schlauchfolie 13' wiederum zur Umlenkwalze 5, welche bereits Teil der Aufwickelvorrichtung darstellt.

In der Ausgangsstellung nach Fig. 9 sind wiederum die Längsachsen der Abzugswalzen 15, 16 und der Wendestangen 2, 6, 11 rechtwinklig zur Ebene 8 angeordnet. Die Drehachse 4 sowie die Schwenkachsen 3, 7 verlaufen in dieser Ebene. In der Vertikalprojektion gesehen befinden sich die erste und die zweite Wendestange 2, 6 auf der der Umlenkwalze 5 abgewandten Seite der Abzugswalzen 15, 16, während die weitere Wendestange 11 auf der gegenüberliegenden Seite zwischen den Abzugswalzen 15, 16 und der Umlenkwalze 5 angeordnet ist.

Wird die Abquetschvorrichtung 1 mit den Abzugswalzen 15, 16 im Uhrzeigersinn gedreht, dann werden die weitere Wendestange 11 um die Drehachse 4 und die zweite Wendestange 6 um die Schwenkachse 7 ebenfalls im Uhrzeigersinn gedreht, während die erste Wendestange 2 um ihre Schwenkachse 3 eine Schwenkbewegung im Gegenuhrzeigersinn ausführt. In Figur 10 sind die Verhältnisse dargestellt, wenn die Abzugswalzen 15, 16 um 90° um die Drehachse 4 gedreht ist. Die Fig. 11 zeigt die Endstellung, bei der sich ausgehend von der Lage nach Fig. 9 das Gestell mit den Abzugswalzen 15, 16 um 180° um die Drehachse 4 gedreht haben. In dieser Lage findet eine Richtungsumkehr Drehung des Gestells 18 mit den Abzugswalzen 15, 16 statt, die sich nunmehr im Gegenuhrzeigersinn um die Drehachse 4 drehen. Diese Drehung wird fortgesetzt über die Lage nach Fig. 9 hinweg um weitere 180° , bis eine Stellung erreicht ist, bei der die Teile im Vergleich zu Fig. 11 spiegelbildlich zur Ebene 8 angeordnet sind.

Wird des Gestell 18 mit den Abzugswalzen 15, 16 um 180° um die Drehachse 4 gedreht, dann führt die erste Wendestange 2 eine Schwenkbewegung um etwa 45° um ihre Schwenkachse 3 aus, welche selbst um 180° um die Drehachse 4 gedreht wurde. Die Schwenkung der weiteren Wendestange 11 um die Drehachse 4 beträgt etwas mehr als 45° während die Schwenkbewegung der zweiten Wendestange 6 um ihre Schwenkachse 7 etwa 22,5° beträgt.

**Patentansprüche**

1. Abzugsvorrichtung für eine im Blasverfahren von einem Extruder mit stationärem Folienblaskopf hergestellte Kunststoff-Schlauchfolie (1), die in einer um eine vertikale Drehachse (4) reversierend drehenden Abquetschvorrichtung (1) mit Abzugswalzen (15, 16) mit horizontalen Drehachsen flachgelegt wird, mit mindestens zwei zwischen der Abquetschvorrichtung (1) und einer stationären Aufwickelvorrichtung angeordneten Wendestangen (2, 6) mit horizontalen Längsachsen, die relativ zur Abquetschvorrichtung (1) schwenkbar sind, wobei die der Abquetschvorrichtung (1) folgende erste Wendestange (2) um eine erste vertikale Achse (3) schwenkbar ist, die im Abstand zur vertikalen Drehachse (4) verläuft und sich zusammen mit der Abquetschvorrichtung (1) um die vertikale Drehachse (4) dreht und die der Aufwickelvorrichtung vorgeordnete letzte Wendestange (6) um eine zweite vertikale Achse (7) schwenkbar ist, die ebenfalls im Abstand zur vertikalen Drehachse (4) verläuft und die durch die Drehachse (4) und die zweite vertikale Achse (7) bestimmte Ebene (8) parallel zur Laufrichtung (9) der Schlauchfolie (13) von der letzten Wendestange (6) zur Aufwickelvorrichtung verläuft, dadurch **gekennzeichnet**, daß der Abstand zwischen der zweiten Achse (7) und der Drehachse (4) veränderbar ist.

2. Abzugsvorrichtung nach Anspruch 1, dadurch **gekennzeichnet**, daß, ausgehend von einer Ausgangslage, bei der die Längsachsen der Wendestangen (2, 6) und der Abzugswalzen (15, 16) alle rechtwinklig zur Ebene (8) verlaufen und die erste vertikale Achse (3) in der Vertikalprojektion zwischen Abquetschvorrichtung (1) und Aufwickelvorrichtung liegt, bei einer Drehung der Abquetschvorrichtung (1) um 135° nach jeder Seite die erste Wendestange (2) um etwa 45° um die erste vertikale Achse (3) und die zweite Wendestange (6) um etwa 22,5° um die zweite vertikale Achse (7) geschwenkt werden, wobei die Schwenkbewegung der ersten Wendestange (2) um die erste Achse (3) gegensinnig zu den Bewegungen der Abquetschvorrichtung (1) und der zweiten Wendestange (6) verläuft.

3. Abzugsvorrichtung nach Anspruch 1, dadurch **gekennzeichnet**, daß im Verlauf der Schlauchfolie (13) zwischen der ersten Wendestange (2) und der zweiten Wendestange (6) eine weitere, eine horizontale Längsachse aufweisende Wendestange (11) angeordnet ist, welche um die vertikale Drehachse (4) schwenkbar ist und eine Sehne eines Kreises um diese Drehachse (4) bildet.

4. Abzugsvorrichtung nach Anspruch 3, dadurch **gekennzeichnet**, daß, ausgehend von der Ausgangslage, bei der die Längsachsen der Wendestangen (2, 6, 11) und der Abzugswalzen (15, 16) alle rechtwinklig zur Ebene (8) verlaufen, in der Vertikalprojektion die weitere Wendestange (11) zwischen Abquetschvorrichtung (1) und der Aufwickelvorrichtung und die erste vertikale Achse (3) zwischen Drehachse (4) und zweiter vertikaler Achse (7) liegt, bei einer Drehung der Abquetschvorrichtung (1) um 180° nach jeder Seite die erste Wendestange (2) um etwa 45° um die erste vertikale Achse (3), die zweite Wendestange (6) um etwa 22,5° um die zweite vertikale Achse (7) und die Wendestange (11) um etwa 45° um die Drehachse (4) geschwenkt werden, wobei die Schwenkbewegung der ersten Wendestange (2) um die erste Achse (3) gegensinnig zu den Bewegungen der Abquetschvorrichtung (1) und der zweiten und der weiteren Wendestange (6, 11) verläuft.

5. Abzugsvorrichtung nach einem der Ansprüche 1 bis 4, dadurch **gekennzeichnet**, daß die flachgelegte Schlauchfolie (13) zwischen der Abquetschvorrichtung (1) und den Wendestangen (2, 6 bzw. 11) und zur Aufwickelvorrichtung jeweils horizontal geführt sind.

**Claims**

1. Delivery device for a plastic blown film (1) produced in the blowing process of an extruder having a stationary film blowing head, said film is flattened in a squeezing device (1), having delivery rollers (15, 16) with horizontal axes of rotation and rotating reversible around a vertical axis of rotation (4), with at least two turning bars (2, 6) disposed between the sequeezing device (1) and a stationary winding-on device having horizontal longitudinal axes and ca be swivelled relative to the squeezing device (1), the first turning bar (2) following the sequeezing device (1) can be swivelled about a first vertical axis (3), which is spaced from the vertical axis of rotation (4) and rotates together with the squeezing device (1) around the vertical axis of rotation (4) and the second turning bar (6) arranged in front of the winding-on device can be swivelled around a second vertical axis (7) which is also spaced from the vertical axis of rotation (4) and the plane (8) defined by the axis of rotation (4) and the ssecond vertical axis (7) being parallel to the direction of travel (9) of the blown film (13) from the second turning bar (6) to the winding-on device, characterised in that the distance between the second axis (7) and the axis of rotation (4) is variable.

2. Delivery device according to Claim 1, characterised in that, proceeding from an initial position in which the longitudinal axes of the turning bars (2, 6) and of the delivery rollers (15, 16) all pass at right angles to the plane (8) and the first vertical axis (3) lies in the vertical projection between squeezing device (1) and winding-on device, with a rotation of the squeezing device (1) through 135° to each side the first turning bar (2) is swivelled by approximately 45° around the first vertical axis (3) and the second turning bar (6) is swivelled by approximately 22.5° around the second vertical axis (7), in which the turning movement of the first turning bar (2) around the first axis (1) occurs in the opposite direction to the movements of the squeezing device (1) and of the second turning bar (6).

3. Delivery device according to Claim 1, characterised in that in the passage of the blown film (13) between the first turning bar (2) and the second turning bar (6) is disposed another turning bar (11), having a horizontal longitudinal axis, which can be swivelled around the vertical axis of rotation (4) and forms a chord of a circle around this axis of rotation (4).

4. Delivery device according to Claim 3, characterised in that, proceeding from the initial position in which the longitudinal axes of the turning bars (2, 6, 11) and of the delivery rollers (15, 16) all pass at right angles to the plane (8), in the vertical projection the other turning bar (11) lies between the squeezing device (1) and the winding-on device and the first vertical axis (3) lies between the axis of rotation (4) and the second vertical axis (7), with a rotation of the squeezing device (1) of 180° to each side the first turning bar (2) is swivelled by approximately 45° around the first vertical axis (3), the second turning bar (6) is swivelled by approximately 22.5° around the second vertical axis (7) and the turning bar (11) is swivelled by approximately 45° around the axis of rotation (4), with the turning movement of the first turning bar (2) around the first axis (3) occuring in the opposite direction to the movements of the squeezing device (1) and of the second and further turning bar (6, 11).

5. Delivery device according to one of Claims 1 to 4, characterised in that the flattened blown film (13) is guided horizontally between the squeezing device (1) and the turning bars (2, 6 or 11) respectively and to the winding-on device.

**Revendications**

1. Dispositif pour le tirage d'une feuille tubulaire (13) en matière plastique, obtenu par soufflage dans une extrudeuse à tête de soufflage fixe, et aplatie dans un dispositif de pressage (1) tournant en renversant autour d'un axe de rotation (4) vertical et comportant des cylindres de tirage (15, 16) à axes de rotation horizontaux, avec au moins deux barres de retournement (2, 6) à axes longitudinaux horizontaux, positionnées entre le dispositif de pressage (1) et un dispositif d'enroulement fixe, les barres de retournement (2, 6) pouvant pivoter par rapport au dispositif de pressage (1), la première barre de retournement (2) suivant le dispositif de pressage (1) peut pivoter autour d'un premier axe vertical (3), situé à une certaine distance de l'axe de rotation (4) autour duquel il peut pivoter en même temps que le dispositif de pressage (1), et la deuxième barre de retournement (6) précédant le dispositif d'enroulement peut pivoter autour d'un deuxième axe vertical (7) situé également à une certaine distance de l'axe vertical (4) et le plan (8) formé par l'axe de rotation (4) et le deuxième axe vertical (7) étant parallèle au sens due déplacement (9) de la feuille tubulaire (13) de la deuxième barre de retournement (6) au dispositif d'enroulement, caractérisé en ce que l'écart entre le deuxième axe (7) et l'axe de rotation (4) peut être modifié.

2. Dispositif de tirage selon la revendication 1, caractérisé en ce que, en partant d'une position de départ dans laquelle les axes longitudinaux des barres de retournement (2, 6) et des cylindres de tirage (15, 16) sont tous perpendiculaires au plan (8), et le premier axe vertical (3) dans la projection verticale entre le dispositif de pressage (1) et le dispositif d'enroulement, une rotation de 135° du dispositif de pressage (1) dans un sens et dans l'autre provoque le pivotement de la première barre de retournement (2) d'environ 45° autour du premier axe vertical (3), et le pivotement de la deuxième barre de retournement (6) d'environ 22,5° autour du deuxième axe vertical (7), le pivotement de la première barre de retournement (2) autour du premier axe (3) étant en sens opposé aux pivotements du dispositif de pressage (1) et de la deuxième barre de retournement (6).

3. Dispositif de tirage selon la revendication 1, caractérisé en ce que se trouve disposée sur le parcours de la feuille tubulaire (13), entre la première barre de retournement (2) et la deuxième barre de retournement (6), une autre barre de retournement (11) présentant un axe longitudinal horizontal et pouvant pivoter autour de l'axe de rotation vertical (4), formant une corde de cercle autour de cet axe (4).

4. Dispositif de tirage selon la revendication 3, caractérisé en ce que, en partant d'une position de départ dans laquelle les axes longitudinaux des barres de retournement (2, 6, 11) et des cylindres de tirage (15, 16) sont tous perpendiculaires au plan (8), l'autre barre de retournement (11) se trouve, dans la projection verticale, entre le dispositif de pressage (1) et le dispositif d'enroulement, et le premier axe vertical (3) entre l'axe de rotation (4) et le deuxième axe vertical (7), une rotation de 180° du dispositif de pressage (1) dans un sens ou dans l'autre provoque un pivotement de la première barre de retournement (2) d'environ 45° autour du premier axe vertical (3), un pivotement de la deuxième barre de retournement (6) d'environ 22,5° autour du deuxième axe vertical (7), et un pivotement de la barre de retournement (11) d'environ 45° autour de l'axe de rotation (4), le pivotement de la première barre de retournement (2) autour du premier axe (3) étant en sens opposé aux pivotements du dispositif de pressage (1) et des autres barres de retournement (6, 11).

5. Dispositif de tirage selon l'une quelconque des revendications 1 à 4, caractérisé en ce que la feuille tubulaire aplatie (13) se déplace horizontalement entre le dispositif de pressage (1) et les barres de retournemenet (2, 6, 11), ainsi qu'en direction du dispositif d'enroulement.

FIG. 1

FIG. 2

FIG.3

FIG.4

FIG.5

FIG.6

8

FIG. 7

FIG 8.

FIG 9

FIG 10

FIG. 11